(19)

**Europäisches Patentamt**
**European Patent Office**
**Office européen des brevets**

(11) **EP 4 672 132 A1**

(12) **EUROPEAN PATENT APPLICATION**

(43) Date of publication:
**31.12.2025 Bulletin 2026/01**

(21) Application number: **24184524.7**

(22) Date of filing: **26.06.2024**

(51) International Patent Classification (IPC):
*G06T 5/50* (2006.01)          *G06T 5/77* (2024.01)
*G06T 7/00* (2017.01)          *G06T 11/00* (2006.01)

(52) Cooperative Patent Classification (CPC):
**G06T 11/008; G06T 5/50; G06T 5/77; G06T 7/0002;**
G06T 2207/20021; G06T 2207/30168;
G06T 2211/424; G06T 2211/441; G06T 2211/448

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Bayer Aktiengesellschaft**
**51373 Leverkusen (DE)**

(72) Inventors:
• **Truong, Dinh Tuan**
  **12489 Berlin (DE)**
• **Lenga, Matthias**
  **24159 Kiel (DE)**
• **Dohmen, Melanie Ellen-Ruth Hildegard**
  **13503 Berlin (DE)**
• **Baltruschat, Ivo Matteo**
  **22299 Hamburg (DE)**

(74) Representative: **BIP Patents**
**c/o Bayer Intellectual Property GmbH**
**Alfred-Nobel-Straße 50**
**40789 Monheim am Rhein (DE)**

(54) **GENERATING SYNTHETIC RADIOLOGIC IMAGES**

(57) Systems, methods, and computer programs disclosed herein relate to generating synthetic radiologic images.

**Fig. 2**

EP 4 672 132 A1

**Description**

FIELD OF THE DISCLOSURE

Systems, methods, and computer programs disclosed herein relate to generating synthetic radiologic images.

BACKGROUND

L. Zhu *et al.* disclose a method of 3D image synthesis with 2D backbones using a latent diffusion model (LDM) (L. Zhu et al.: Make-A-Volume: Leveraging Latent Diffusion Models for Cross Modality 3D Brain MRI Synthesis, ar-Xiv:2307.10094v1, 2023).
Y. Hu *et al.* disclose a method of generating 3D MRI images from multi-Gradient-Recalled Echo (mGRE) MRI signals using a 2.5D diffusion model (Y. Hu et al.: DiffGEPCI: 3D MRI Synthesis from mGRE Signals using 2.5D Diffusion Model, arXiv:2311.18073v2, 2024).
Utilizing 2D or 2.5D diffusion models in the medical imaging domain benefits significantly from leveraging knowledge in natural images such as pretrained autoencoders in LDMs or foundational diffusion models. However, a critical challenge that arises in these scenarios is the occurrence of stripes or streaking artifacts in sagittal and coronal views, especially when sampling axial slices. These artifacts can have a negative impact on the diagnostic value of the synthesized images. To mitigate this problem, 3D denoising diffusion probability models (DDPMs) or 3D latent diffusion models can be used directly. These models consider the entire 3D volume of the image or at least a compressed representation. However, this solution is significantly limited by the high computational resource requirements in both the training and inference phases. This limitation represents a significant obstacle to the widespread application of such models. In addition, the potential scarcity of available 3D volumes poses the risk of overfitting during the training phase for both autoencoders and diffusion models.

SUMMARY

These problems are addressed by the subject matter of the independent claims of the present disclosure. Exemplary embodiments are defined in the dependent claims, the description, and the drawings.
In a first aspect, the present disclosure relates to a computer-implemented method comprising:

- providing a trained conditional generative model,

- providing one or more conditional inputs,

- generating a number of synthetic radiologic images from different seeds based on the one or more conditional inputs using the trained generative model,

- generating a combined synthetic radiologic image based on the number of synthetic radiologic images,

- outputting and/or storing the combined synthetic radiologic image, and/or transmitting the combined synthetic radiologic image to a separate computer system.

In another aspect, the present disclosure provides a computer system comprising:

a processor; and

a memory storing an application program configured to perform, when executed by the processor, an operation, the operation comprising:

- providing a trained conditional generative model,

- providing one or more conditional inputs,

- generating a number of synthetic radiologic images from different seeds based on the one or more conditional inputs using the trained generative model,

- generating a combined synthetic radiologic image based on the number of synthetic radiologic images,

- outputting and/or storing the combined synthetic radiologic image, and/or transmitting the combined synthetic radiologic image to a separate computer system.

In another aspect, the present disclosure provides a non-transitory computer readable storage medium having stored thereon software instructions that, when executed by a processor of a computer system, cause the computer system to perform the following steps:

- providing a trained conditional generative model,

- providing one or more conditional inputs,

- generating a number of synthetic radiologic images from different seeds based on the one or more conditional inputs using the trained generative model,

- generating a combined synthetic radiologic image based on the number of synthetic radiologic images,

- outputting and/or storing the combined synthetic radiologic image, and/or transmitting the combined synthetic radiologic image to a separate computer system.

BRIEF DESCRIPTION OF THE DRAWINGS

Fig. 1 shows schematically an embodiment of the training of the conditional generative model.

Fig. 2 shows a schematic example of generating of a synthetic radiologic image using the trained conditional generative model.

Fig. 3 shows an embodiment of the method for generating a synthetic radiologic image in the form of a flowchart.

Fig. 4 shows another embodiment of the method for generating a synthetic radiologic image in the form of a flowchart.

Fig. 5 illustrates a computer system according to some example implementations of the present disclosure in more detail.

DETAILED DESCRIPTION

Various example embodiments will be more particularly elucidated below without distinguishing between the aspects of the disclosure (method, computer system, computer-readable storage medium). On the contrary, the following elucidations are intended to apply analogously to all the aspects of the disclosure, irrespective of in which context (method, computer system, computer-readable storage medium) they occur.
If steps are stated in an order in the present description or in the claims, this does not necessarily mean that the disclosure is restricted to the stated order. On the contrary, it is conceivable that the steps can also be executed in a different order or else in parallel to one another, unless, for example one step builds upon another step, this requiring that the building step be executed subsequently (this being, however, clear in the individual case). The stated orders may thus be exemplary embodiments of the present disclosure.
As used herein, the articles "a" and "an" are intended to include one or more items and may be used interchangeably with "one or more" and "at least one." As used in the specification and the claims, the singular form of "a", "an", and "the" include plural referents, unless the context clearly dictates otherwise. Where only one item is intended, the term "one" or similar language is used. Also, as used herein, the terms "has", "have", "having", or the like are intended to be open-ended terms. Further, the phrase "based on" is intended to mean "based at least partially on" unless explicitly stated otherwise. Further, the phrase "based on" may mean "in response to" and be indicative of a condition for automatically triggering a specified operation of an electronic device (e.g., a controller, a processor, a computing device, etc.) as appropriately referred to herein.
Some implementations of the present disclosure will be described more fully hereinafter with reference to the accompanying drawings, in which some, but not all implementations of the disclosure are shown. Indeed, various implementations of the disclosure may be embodied in many different forms and should not be construed as limited to the implementations set forth herein; rather, these example implementations are provided so that this disclosure will be thorough and complete, and will fully convey the scope of the disclosure to those skilled in the art.

Various embodiments are described in this disclosure. The embodiments may be combined with each other as desired, provided that they are not mutually exclusive. The present disclosure thus also covers all possible combinations of embodiments.

The terms used in this disclosure have the meaning that these terms have in the prior art, in particular in the prior art cited in this disclosure, unless otherwise indicated.

The present disclosure provides means for generating a synthetic radiologic image.

The term "synthetic" means that the synthetic radiologic image is not the (direct) result of a physical measurement on a real object under examination, but that the synthetic radiologic image has been generated by a generative model. A synonym for the term "synthetic" is the term "artificial". A synthetic radiologic image may however be based on one or more measured data, e.g., the generative model may be able to generate the synthetic radiologic image based on one or more measured radiologic images (and/or other/further data).

"Radiology" is the branch of medicine concerned with the application of electromagnetic radiation and mechanical waves (including, for example, ultrasound diagnostics) for diagnostic, therapeutic and/or scientific purposes. In addition to X-rays, other ionizing radiation such as gamma rays or electrons are also used. Since a primary purpose is imaging, other imaging procedures such as sonography and magnetic resonance imaging (MRI) are also included in radiology, although no ionizing radiation is used in these procedures. Thus, the term "radiology" as used in the present disclosure includes, in particular, the following examination procedures: computed tomography, magnetic resonance imaging, sonography, positron emission tomography (PET).

The term "image" as used herein means a data structure that represents a spatial distribution of a physical signal. The spatial distribution may be of any shape, for example forming a grid and thereby defining pixels or voxels, the grid being possibly irregular or regular. An image is typically composed of a matrix of image elements (e.g., pixels or voxels), each with a quantified intensity value representing the physical signal. In case of radiologic images these values correspond to different levels of radiologic signals or properties captured during the imaging process. The collective interpretation of these values allows for the visualization and examination of anatomical structures, physiological processes, or potential pathological anomalies within the imaged object.

The synthetic radiologic image is usually a two-dimensional (2D) image. Several synthetic radiologic images may be combined to form a three-dimensional (3D) synthetic radiologic image. While a two-dimensional synthetic radiologic image usually represents a slice within an examination object, a three-dimensional synthetic radiologic image represents a volume comprising multiple slices within the examination object.

In an embodiment of the present disclosure, the synthetic radiologic image is a synthetic MRI image.

In an embodiment of the present disclosure, the synthetic radiologic image is a synthetic CT image.

In an embodiment of the present disclosure, the synthetic radiologic image is a synthetic ultrasound image.

In an embodiment of the present disclosure, the synthetic radiologic image is a synthetic PET image.

The synthetic radiologic image represents an examination area of an examination object.

In an embodiment of the present disclosure, the "examination object" is a living being.

In an embodiment of the present disclosure, the "examination object" is a mammal.

In an embodiment of the present disclosure, the "examination object" is a human.

The "examination area" is a part of the examination object, for example an organ or part of an organ or a plurality of organs or another part of the examination object.

For example, the examination area may be a liver, kidney, heart, lung, brain, stomach, bladder, prostate, intestine or a part of said parts or another part of the body of a mammal (for example a human).

In an embodiment, the examination area includes a liver or part of a liver or the examination area is a liver or part of a liver of a mammal, e.g. a human.

In a further embodiment, the examination area includes a brain or part of a brain or the examination area is a brain or part of a brain of a mammal, e.g. a human.

In a further embodiment, the examination area includes a heart or part of a heart or the examination area is a heart or part of a heart of a mammal, e.g. a human.

In a further embodiment, the examination area includes a thorax or part of a thorax or the examination area is a thorax or part of a thorax of a mammal, e.g. a human.

In a further embodiment, the examination area includes a stomach or part of a stomach or the examination area is a stomach or part of a stomach of a mammal, e.g. a human.

In a further embodiment, the examination area includes a pancreas or part of a pancreas or the examination area is a pancreas or part of a pancreas of a mammal, e.g. a human.

In a further embodiment, the examination area includes a kidney or part of a kidney or the examination area is a kidney or part of a kidney of a mammal, e.g. a human.

In a further embodiment, the examination area includes a thyroid or part of a thyroid or the examination area is a thyroid or part of a thyroid of a mammal, e.g. a human.

In a further embodiment, the examination area includes one or both lungs or part of a lung of a mammal, e.g. a human.

In a further embodiment, the examination area includes a breast or part of a breast or the examination area is a breast or part of a breast of a female mammal, e.g. a female human.

In a further embodiment, the examination area includes a uterus or part of a uterus or the examination area is a uterus or part of a uterus of a female mammal, e.g. a female human.

In a further embodiment, the examination area includes a prostate or part of a prostate or the examination area is a prostate or part of a prostate of a male mammal, e.g. a male human.

The synthetic radiologic image can be a native image, i.e. an image without contrast agent. The synthetic radiologic image can be an image after application of an amount of a contrast agent.

"Contrast agents" are substances or mixtures of substances that improve the depiction of structures and functions of the body in radiologic examinations.

In computed tomography, iodine-containing solutions are usually used as contrast agents. In magnetic resonance imaging (MRI), superparamagnetic substances (for example iron oxide nanoparticles, superparamagnetic iron-platinum particles (SIPPs)) or paramagnetic substances (for example gadolinium chelates, manganese chelates, hafnium chelates) are usually used as contrast agents. In the case of sonography, liquids containing gas-filled microbubbles are usually administered intravenously. In positron emission tomography (PET) radiotracers are used as contrast agents. Contrast in PET images is caused by the differential uptake of the radiotracer in different tissues or organs. A radiotracer is a radioactive substance that is injected into the examination object. The radiotracer emits positrons. When a positron collides with an electron within the examination area of the examination object, both particles are annihilated, producing two gamma rays that are emitted in opposite directions. These gamma rays are then detected by a PET scanner, allowing the creation of detailed images of the body's internal functioning.

The synthetic radiologic image is generated using a trained conditional generative model.

A "generative model" is a type of machine learning model that is designed to learn and generate new data that resembles the training data it was trained on. Generative models capture the underlying distribution of the training data and can generate samples from that distribution.

A "conditional generative model" is a type of generative model that generates data (in this case, a synthetic radiologic image) given certain conditions or constraints. Conditional generative models take additional input in the form of a condition that guides the process of generating the synthetic radiologic image. In general, this condition can be anything that provides some sort of context for the generation process, such as a class label, a text description, an image, or any other piece of information.

In an embodiment of the present disclosure, the conditional generative model is or comprises a diffusion model, or at least the denoising model of a diffusion model.

Diffusion models focus on modeling the step-by-step evolution of a data distribution from a "simple" starting point to a "more complex" distribution. The underlying concept of diffusion models is to transform a simple and easily sampleable distribution, typically a Gaussian distribution, into a more complex data distribution of interest. This transformation is achieved through a series of invertible operations. Once the model learns the transformation process, it can generate new samples by starting from a point in the simple distribution and gradually "diffusing" it to the desired complex data distribution.

When trained, a diffusion model usually comprises a noising model and a denoising model.

The noising model usually comprises a plurality of noising stages. The noising model is configured to receive input data (e.g., an image) and produce noisy data in response to receipt of the input data. The noising model introduces noise to the input data to obfuscate the input data after a number of stages, or "timesteps" $T$. "Noise" refers to random variations or disturbances that are intentionally added to data or signals. The noising model can be or can include a finite number of steps $T$ or an infinite number of steps ($T \to \infty$). The noising model may have the same weights/architectures for all timesteps or different weights/architectures for each timestep. The number of timesteps can be global (i.e., timesteps are the same for all pixels of an image) or local (e.g., each pixel in an image might have a different timestep). The noising model may be based on different noise types, for example, noise sampled from the Gaussian distribution but also noise stepping from blurring or masking. Further examples are uniform noise, salt- and-pepper noise, Poisson noise, Speckle noise.

The denoising model is configured to reconstruct the input data from noise data. The denoising model is configured to produce samples matching the input data after a number of stages.

For example, the diffusion model may include Markov chains at the noising model and/or denoising model. The diffusion models may be implemented in discrete time, e.g., where each layer corresponds to a timestep. The diffusion model may also be implemented in arbitrarily deep (e.g., continuous) time.

The diffusion model can be a Latent Diffusion Model (LDM). In such a model, the diffusion approach in the case of an image is not performed in real space (e.g., pixel space or voxel space or doxel space, as the case may be), but in so-called latent space based on a representation of the image, usually a compressed representation (see, e.g., R. Rombach *et al.: High-Resolution Image Synthesis with Latent Diffusion Models,* arXiv:2112.10752v2).

The diffusion model may be a Denoising Diffusion Probabilistic Model (DDPM). DDPMs are a class of generative models that work by iteratively adding noise to input data (e.g., an image or a compressed representation) and then learning to denoise from the noisy signal to generate new samples (see, e.g., J. Ho et al.: Denoising Diffusion Probabilistic Models, arXiv:2006.11239v2).

The diffusion model may be a Score-based Generative Model (SGM). In SGMs the data is perturbed with random Gaussian noise of various magnitudes. With the gradient of log probability density as score function, samples are generated towards decreasing noise levels and the model is trained by estimating the score functions for noisy data distribution (see, e.g., Y. Song et al.: Score-Based Generative Modeling through Stochastic Differential Equations, arXiv:2011.13456v2).

The diffusion model may be a Denoising Diffusion Implicit Model (DDIM) (see, e.g.: J. Song et al.: Denoising Diffusion Implicit Models, arXiv:2010.02502v4). A critical drawback of DDPMs is that they require many iterations to produce a high-quality sample. For DDPMs, this is because the generative process (from noise to data) approximates the reverse of the forward diffusion process (from data to noise), which could have thousands of steps; iterating over all the steps is required to produce a single sample. DDIMs are implicit probabilistic models that are closely related to DDPMs, in the sense that they are trained with the same objective function. DDIMs allow for much faster sampling while keeping an equivalent training objective. They do this by estimating the addition of multiple Markov chain steps and adding them all at once. DDIMs construct a class of non-Markovian diffusion processes which makes sampling from reverse process much faster. This modification in the forward process preserves the goal of DDPM and allows for deterministically encoding an image to the noise map.

Unlike DDPMs, DDIMs enable control over image synthesis owing to the latent space flexibility (attribute manipulation) (see, e.g., K. Preechakul et al.: Diffusion autoencoders: Toward a meaningful and decodable representation, arXiv:2111.15640v3). With DDIM, it is possible to run the generative process backward deterministically to obtain the noise map $x_T$, which represents the latent variable or encoding of a given image $x_0$. In this context, DDIM can be thought of as an image decoder that decodes the latent code $x_T$ back to the input image. This process can yield a very accurate reconstruction; however, $x_T$ still does not contain high-level semantics as would be expected from a meaningful representation.

The conditional generative model of the present disclosure is trained.

The conditional generative model may have been trained to generate a synthetic radiologic image based on a first and/or a second (e.g. measured) radiologic image (and/or based on conditional inputs generated therefrom). The first radiologic image may represent an examination area of an examination object without contrast agent or after application of a first amount of a contrast agent. The second radiologic image may represent the examination area of the examination object after application of a second amount of the contrast agent, wherein the second amount is different from (e.g. greater than) the first amount. The synthetic radiologic image may represent the examination area of the examination object after application of a third amount of the contrast agent, wherein the third amount is different from (e.g. greater than) the second amount and the first amount (see, e.g., WO2019/074938A1, WO2022184297A1).

The conditional generative model may have been trained to generate a synthetic radiologic image based on a first and/or a second (e.g. measured) radiologic image (and/or based on conditional inputs generated therefrom). The first radiologic image may represent an examination area of an examination object after application of a first amount of contrast agent. The second radiologic image may represent the examination area of the examination object after application of a second amount of the contrast agent, wherein the second amount is different from (e.g. greater than) the first amount. The synthetic radiologic image may represent the examination area of the examination object without contrast agent (see, e.g., WO2021069338A1).

The conditional generative model may have been trained to generate a synthetic radiologic image based on a first and/or a second (e.g. measured) radiologic image (and/or based on conditional inputs generated therefrom). The first radiologic image may represent an examination area of an examination object at a first point in time. The second radiologic image may represent the examination area of the examination object at a second point in time, wherein the second point in time is different from (e.g. later than) the first point in time. The synthetic radiologic image may represent the examination area of the examination object at a third point in time, wherein the third point in time is different from (e.g. later than) the first point in time and the second point in time (see, e.g., WO2021052896A1).

The conditional generative model may have been trained to reconstruct an MRI image from undersampled MRI data (see, e.g., US11170543B2, US11181598B2).

The conditional generative model may have been trained to generate a high radiation dose CT image based on one or more low radiation dose CT images and/or based on conditional inputs generated therefrom (see, e.g., WO2016/175755A1, WO2014/036473A1).

The conditional generative model may have been trained to generate a synthetic radiologic image of a first modality based on one or more (e.g. measured) radiologic images of one or more other modalities and/or based on conditional inputs generated therefrom (see, e.g., WO2022120731A1, US20220292737).

Training is carried out with training data. The training data usually comprises input data and target data for each reference object of a plurality of reference objects. The term "plurality" means more than ten, e.g., more than a hundred, or more than a thousand.

The input data is the data that is fed to the conditional generative model and on the basis of which the conditional generative model is to generate a synthetic radiologic image. The synthetic radiologic image generated by the conditional generative model (output data) is compared with the target data. Deviations between the synthetic radiologic image and the target data are usually reduced in an optimization procedure (e.g. a gradient descent procedure) by modifying parameters of the conditional generative model.

The training of the conditional generative model can be ended when a stop criterion is met. Such a stop criterion can be for example: a predefined maximum number of training steps/cycles/epochs has been performed, deviations between output data and target data can no longer be reduced by modifying the model parameters, a predefined minimum of a loss function is reached, and/or an extreme value (e.g., maximum or minimum) of another performance value is reached.

What exactly the training data looks like depends on what the conditional generative model is being trained for. An expert will select the appropriate training data depending on the task that the conditional generative model is to solve. For the present disclosure, it is irrelevant which specific task the conditional generative model solves and/or is trained for. Some examples are given in this disclosure, without the intention of reducing the disclosure to these examples.

The conditional generative model of the present disclosure may be configured and trained to generate a synthetic radiologic image representing a portion of the examination area. Multiple synthetic radiologic images representing different portions of the examination area may be merged into a synthetic radiologic image representing the entire examination area.

The conditional generative model of the present disclosure is usually configured and trained to generate a two-dimensional (2D) synthetic radiologic image.

The conditional generative model of the present disclosure may be a 2D model or a 2.5D model. In a 2D model, synthetic 2D images are typically generated based on 2D information about the examination area of the examination object (e.g., the examination area may be a slice within the examination object). For example, the generative 2D model may be configured and trained to generate a 2D synthetic radiologic image based on one or more measured 2D radiologic images.

In a 2.5D model, information about the third dimension may also be included in the generation of the 2D synthetic radiologic image. For example, it is possible that the generation of a 2D synthetic radiologic image is not only based on one or more 2D radiologic images, but that radiologic images from neighbouring slices are also included in the generation of the 2D synthetic radiologic image.

In a further step, one or more conditional inputs are provided. The one or more conditional inputs may, for example, be read from a data store, transmitted from another computer system, and/or entered into the computer system of the present disclosure by a user.

The one or more conditional inputs may also be generated by the computer system of the present disclosure, for example, based on data entered by a user, read from a data store, and/or transmitted to the computer system of the present disclosure from a separate computer system.

The one or more conditional inputs define the conditions and/or constraints that the conditional generative model has to take into account when generating the synthetic radiologic image. Usually, the one or more conditional inputs represent the same examination area of the same examination object as the synthetic radiologic image.

The one or more conditional inputs may be or be based on, for example, a text and/or an image and/or other/further data.

Such text may describe and/or specify the examination area and/or the examination object. Such text may describe what image format the synthetic radiologic image should have and/or what type of radiologic image it should be. Such text may describe whether the synthetic radiologic image is to represent the examination area with or without contrast agent. Such text may specify the type and/or amount of contrast agent. Such text may indicate in which phase of a dynamic examination and/or at what time the synthetic radiologic image should represent the examination area.

An image can comprise one or more radiological images of the examination area of the examination object and/or one or more neighbouring areas.

The one or more conditional inputs may be, for example, a text embedding and/or an image embedding.

For example, when the conditional generative model is configured and trained to generate a synthetic radiologic image based on one or more measured radiologic images, the conditional input may be or include one or more image embeddings of the one or more measured radiologic images.

"Text embeddings" are a form of representation that allows words, phrases, sentences, or even entire documents to be represented as real numbers (e.g., as vectors). The primary goal of text embeddings is to capture the semantic meaning of the text in a way that is understandable to computers. In essence, embeddings map the textual content to a high-dimensional space where the distance and direction between vectors aim to reflect the semantic similarity between the pieces of text they represent.

Transformers have become one of the most effective methods for generating text embeddings. Models like BERT (Bidirectional Encoder Representations from Transformers), GPT (Generative Pre-trained Transformer), and their variants use a mechanism known as self-attention to analyze and understand the context of each word within a sentence or a document, relative to all other words. This allows them to capture a deep, contextualized representation of text.

An "image embedding" is a numerical representation of an image that captures the salient features of the image.

An image embedding usually captures the meaning or semantics of the image. It aims to encode the high-level information and concepts present in the image, allowing machines to understand and reason about the content of the image. For example, information about morphologies, colours, structures and/or relationships between structures contained in the image can be agglomerated in an image embedding of the image.

The image embedding can be a vector or a matrix or a tensor or another arrangement of numbers.

The image embedding may be generated with the help of an image encoder. The image encoder can be part of the conditional generative model or a separate unit.

An image embedding can be obtained, for example, by passing the image through a pre-trained machine learning model and then extracting the output of one layer of the machine learning model.

The machine learning model for generating image embeddings can be or comprise a (pre-trained) convolutional neural network, for example.

In an embodiment of the present disclosure, the image embeddings are generated with an encoder of an optionally pre-trained autoencoder. An example of such an autoencoder is the U-Net (see, e.g., O. Ronneberger et al.: U-net: Convolutional networks for biomedical image segmentation, International Conference on Medical image computing and computer-assisted intervention, 234-241, Springer, 2015, DOI: 10.1007/978-3-319-24574-4_28). Further examples of autoencoders are sparse autoencoders, denoising autoencoders, variational autoencoders (VAEs), and generative adversarial networks (GANs). The autoencoder can be (pre-)trained based on (non-annotated) images. The images used for pre-training can be medical images, but they can also be other images or include other images.

Autoencoders can be (pre-)trained using a self-supervised learning approach, meaning they do not require labelled data for training.

The term "pre-trained" refers to a model that has been trained on a dataset in advance. Pre-training involves training a model on a task or dataset that is typically different from the specific task for which the model will be used later. The pre-training process involves exposing the model to a vast amount of data and allowing it to learn general patterns and representations from that data. This enables the model to capture common features and structures that are useful across various related tasks. The model is typically trained using unsupervised or self-supervised learning methods, where the labels or annotations are generated automatically or do not require human intervention.

In another embodiment of the present disclosure, the image embeddings are generated with the help of an encoder of a pre-trained vision transformer.

In a vision transformer, the input image may be divided into a sequence of patches, which may then flattened and fed into a series of transformer layers. These transformer layers comprise attention modules and feed-forward neural networks. The attention mechanism allows the model to capture the relationships between different patches and learn global context information, while the feed-forward networks enable non-linear transformations (see, e.g., S. Khan et al.: Transformers in Vision: A Survey, arXiv:2101.01169v5).

Like the autoencoder, the vision transformer is preferably pre-trained. The vision transformer may have been pre-trained in a supervised, self-supervised or unsupervised approach.

For example, the vision transformer may have been pre-trained in a DINO approach (see, e.g., M. Caron et al.: Emerging Properties in Self-Supervised Vision Transformers, arXiv:2104.14294v2) or a DiNOv2 approach (see, e.g., M. Oquab et al.: DINOv2: Learning Robust Visual Features without Supervision, arXiv:2304.07193v1).

In another embodiment of the present disclosure, image embeddings and/or text embedding are embeddings generated with the help of an image encoder or text encoder of a pre-trained CLIP model (see, e.g., A. Radford et al.: Learning Transferable Visual Models From Natural Language Supervision, arXiv:2103.00020v1).

In another embodiment of the present disclosure, the image encoder and/or or text encoder of a pre-trained CLIP model is used which was pre-trained on medical images and/or medical texts, such as BiomedCLIP (see, e.g., S. Zhang et al.: Large-Scale Domain-Specific Pretraining for Biomedical Vision-Language Processing, arXiv:2303.00915v1).

Based on the one or more conditional inputs, the trained conditional generative model is used to generate a series of synthetic radiologic images.

The generation of a synthetic radiologic image using a trained conditional generative model usually starts from an initial distribution, also referred to as a "seed" in this disclosure. The seed may be, for example, noise data. The seed may be, for example, a noisy image. The noise may be, for example, Gaussian noise.

Not only one synthetic radiologic image is generated, but a series of synthetic radiologic images. Each synthetic radiologic image in the series of radiologic images is based on a different seed, but on the same conditional input(s). The seeds may be random.

The series includes a number $N$ of synthetic radiologic images. The number $N$ can be fixed or variable. The number N can be predefined (e.g. by a user) or it can be determined in the course of the method of the present disclosure. The number N is larger than 1, and can be in the range from 2 to 100, but it can also be greater than one hundred.

In an embodiment of the present disclosure, the number of synthetic radiologic images generated depends on whether and/or to what extent artifacts are reduced by combining the generated synthetic radiologic images. Details can be found later in the description.

In a further step, the synthetic radiologic images generated by the trained conditional generative model are combined into a combined synthetic radiologic image.

For example, the combined synthetic radiologic image may be a radiologic image averaged over all synthetic radiologic images in the series of synthetic radiologic images.

For example, a mean intensity value can be calculated for each corresponding image element of the synthetic radiologic images. The mean value can be, for example, the arithmetic mean or the geometric mean or another mean value.

There may be other methods for combining.

The combined synthetic radiologic image representation can be output (e.g., shown on a display and/or printed out on a printer), stored in a data memory and/or transferred to another computer system.

The combined synthetic radiologic image may be stitched (fused, merged) with other combined synthetic radiologic images to generate a three-dimensional (3D) synthetic radiologic image. Each image that is merged with other images to form a 3D image can represent a different portion of the examination area of the examination object (e.g. a different layer).

It is possible that the trained conditional generative model of the present disclosure is used to generate slice-by-slice two-dimensional synthetic radiologic images of examination areas of the examination object, which are then stitched together to represent a volume within the examination object.

From such a three-dimensional synthetic radiologic image, slices can be sampled along different directions, e.g. parallel to the axial, coronal and/or sagittal plane of the examination object. These slices exhibit less stripe and/or streaking artifacts than comparable slices generated from non-combined (i.e., single, N--1) synthetic radiologic images.

In an embodiment of the present disclosure, synthetic radiologic images are generated and combined in stages to generate a combined synthetic radiologic image. For example, two synthetic radiologic images may be generated and combined to generate a first combined synthetic radiologic image. Then, a third synthetic radiologic image may be generated and combined with the two previously generated synthetic radiologic images to generate a second combined synthetic radiologic image. Subsequently, a fourth synthetic radiologic image may be generated and combined with the previously generated three synthetic radiologic images to generate a third combined radiologic image. And so on. For each of these generated combined synthetic radiologic images, it can be checked whether artifacts have been reduced and/or whether the reduction of artifacts has reached a desired level and/or whether the addition of a further synthetic radiologic image leads to a further reduction of artifacts.

A measure of the presence and/or extent of artifacts can be a score that quantifies the artifacts in slices parallel to defined planes (e.g., axial, coronal and/or sagittal plane) in a synthetic 3D radiologic image composed of combined synthetic radiologic images.

A method for quantifying artifacts is described in more detail below, without the intention to limit the disclosure to this example.

To accurately assess (e.g. quantify) streaking artifacts within synthesized radiologic images, representative slices from different views (e.g., axial, sagittal, and coronal plane) may be analyzed.

In an embodiment of the present disclosure a quantitative non-reference metric is used which is designed to measure the visibility of streaking artifacts across the different planes. This "stripe visibility score" (*SVS*) may be calculated by first generating stripe maps, which may be derived from the L2 norm of the difference between original image slices and their corresponding destriped versions:

$$SVS = \frac{1}{3}\sum_{p=1}^{3}\left\|\mathbf{I}_p - destribe(\mathbf{I}_p)\right\|_2^2$$

wherein *p* represents a number of different planes, e.g. the axial, sagittal, and coronal plane, I represents the slice (2D image) parallel to a plane *p,* and *destribe* denotes a method to remove stripes and/or streaking artifacts from images.

Methods for removing stripes and/or streaking artifacts from images are disclosed in the prior art (see, e.g., B. Münch et al.: Stripe and ring artifact removal with combined wavelet - Fourier filtering, Opt. Express 17, 2009, 8567-8591; J. Swaney et al.: Scalable image processing techniques for quantitative analysis of volumetric biological images from light-sheet microscopy, doi: https://doi.org/10.1101/576595).

By quantifying the difference between the original and destriped images, the *SVS* provides a robust indicator of the artifact's visibility, thereby enabling a systematic evaluation of image synthesis quality with respect to stripe and/or streaking artifacts.

The higher the stripe visibility score *SVS,* the more stripes and/or streaking artifacts there are.

Other embodiments of the stripe visibility score *SVS* may utilize other norms, for example the L1 norm and/or compute the difference maps in multiple slices $\mathbf{I}_{s_1^p}, ..., \mathbf{I}_{s_{N_p}^p}$ per direction. Here $N_p$ denotes the number of slices used per direction:

$$SVS = \frac{1}{3}\sum_{p=1}^{3}\frac{1}{N_p}\sum_{i=1}^{N_p}\left\|\mathbf{I}_{s_i^p} - destripe(\mathbf{I}_{s_i^p})\right\|$$

$$SVS = \max_{p=1,2,3}\frac{1}{N_p}\sum_{i=1}^{N_p}\left\|\mathbf{I}_{s_i^p} - destripe(\mathbf{I}_{s_i^p})\right\|$$

$$SVS = \frac{1}{3}\sum_{P=1}^{3}\max_{i=1,...,N_p}\left\|\mathbf{I}_{s_i^p} - destripe(\mathbf{I}_{s_i^p})\right\|$$

$$SVS = \max_{p=1,2,3}\max_{i=1,...,N_p}\left\|\mathbf{I}_{s_i^p} - destripe(\mathbf{I}_{s_i^p})\right\|$$

In an embodiment of the present disclosure, synthetic radiologic images are progressively generated and combined into a combined synthetic radiologic image (i) until the *SVS* reaches or falls below a pre-defined threshold value, or (ii) the *SVS* has reached a minimum, i.e., increasing the number of synthetic radiologic images in generating the combined synthetic radiologic image does not result in a decrease in the *SVS.*

Further embodiments of the present disclosure are:

1. A computer-implemented method comprising:

- providing a trained conditional generative model,

- providing one or more conditional inputs,

- generating a number *N* of synthetic radiologic images from different seeds based on the one or more conditional inputs using the trained generative model,

- generating a combined synthetic radiologic image based on the number *N* of synthetic radiologic images,

- outputting and/or storing the combined synthetic radiologic image, and/or transmitting the combined synthetic radiologic image to a separate computer system.

2. The computer-implemented method of embodiment 1, wherein the combined synthetic radiologic image is a synthetic radiologic image averaged over all synthetic radiologic images of the number N of synthetic radiologic images.

3. The computer-implemented method of embodiment 1 or 2, wherein the trained conditional generative model is based on a trained diffusion model, wherein each seed of the different seeds comprises different noise data.

4. The computer-implemented method of any one of embodiments 1 to 3, wherein each seed of the different seeds is a different noisy image

5. The computer-implemented method of any one of embodiments 1 to 4, wherein the different seeds are randomly sampled.

6. The computer-implemented method of any one of embodiments 1 to 5, wherein the number N is an integer greater than 1 and less than 100.

7. The computer-implemented method of any one of embodiments 1 to 6, wherein the number N depends on whether and/or to what extent artifacts are reduced by combining the generated synthetic radiologic images.

8. The computer-implemented method of any one of embodiments 1 to 7, comprising:

(1) providing a trained conditional generative model,

(2) providing one or more conditional inputs,

(3) generating a number N of synthetic radiologic images from different seeds based on the one or more conditional inputs using the trained generative model, wherein each synthetic radiologic image represents the same portion of an examination area of an examination object,

(4) generating a combined synthetic radiologic image based on the number *N* of synthetic radiologic images, wherein the combined synthetic radiologic image represents the portion of the examination area of the examination object,

(5) repeating steps (2) to (4) one or more times and thereby generating combined synthetic radiologic images representing one or more additional portions of the examination area of the examination object,

(6) fusing the combined synthetic radiologic images into a three-dimensional synthetic radiologic image,

(7) determining whether the three-dimensional synthetic radiologic image meets one or more predetermined criteria with respect to stripe and/or streaking artifacts,

(8) in the event that the predetermined criteria are not met: increasing the number N of synthetic radiologic images until the criteria are met and/or until increasing the number N of synthetic radiologic images no longer results in a reduction of stripe and/or streaking artifacts,

(9) outputting and/or storing the combined synthetic radiologic images and/or the three-dimensional synthetic radiologic image, and/or transmitting the combined synthetic radiologic images and/or the three-dimensional synthetic radiologic image to a separate computer system.

9. The computer-implemented method of embodiment 8, wherein determining whether the three-dimensional synthetic radiologic image meets one or more predetermined criteria with respect to streaking and/or streaking artifacts comprises:

-   sampling slices from the three-dimensional synthetic radiologic image along different directions,

-   quantifying stripe and/or streaking artifact in the sampled slices.

10. The computer-implemented method of embodiment 8 or 9, wherein determining whether the three-dimensional synthetic radiologic image meets one or more predetermined criteria with respect to streaking and/or streaking artifacts comprises:

-   calculating a stripe visibility score *SVS* according to any one or formulae (I) to (V)

$$SVS = \frac{1}{3}\sum_{p=1}^{3}\left\|\mathbf{I}_p - destribe(\mathbf{I}_p)\right\| \quad (I)$$

$$SVS = \frac{1}{3}\sum_{p=1}^{3}\frac{1}{N_p}\sum_{i=1}^{N_p}\left\|\mathbf{I}_{s_i^p} - destripe(\mathbf{I}_{s_i^p})\right\| \quad (II)$$

$$SVS = \max_{p=1,2,3} \frac{1}{N_p} \sum_{i=1}^{N_p} \left\| \mathbf{I}_{s_i^p} - destripe(\mathbf{I}_{s_i^p}) \right\| \quad \text{(III)}$$

$$SVS = \frac{1}{3} \sum_{P=1}^{3} \max_{i=1,\ldots,N_p} \left\| \mathbf{I}_{s_i^p} - destripe(\mathbf{I}_{s_i^p}) \right\| \quad \text{(IV)}$$

$$SVS = \max_{p=1,2,3} \max_{i=1,\ldots,N_p} \left\| \mathbf{I}_{s_i^p} - destripe(\mathbf{I}_{s_i^p}) \right\| \quad \text{(V)}$$

wherein $\mathbf{I}_p$ represents a slice parallel to a plane $p$,

wherein $p$ represents different planes,

wherein $N_p$ denotes the number of slices parallel to a plane $p$,

wherein $\mathbf{I}_{s_1^p}, \ldots, \mathbf{I}_{s_{N_p}^p}$ represent the slices parallel to a plane $p$,

wherein *destribe* denotes a method to remove stripes and/or streaking artifacts from images.

11. The computer-implemented method of embodiment 10, wherein determining whether the three-dimensional synthetic radiologic image meets one or more predetermined criteria with respect to streaking and/or streaking artifacts comprises:

- progressively generating synthetic radiologic images and combining the generated synthetic radiologic images into a combined synthetic radiologic image until the stripe visibility score *SVS* reaches or falls below a pre-defined threshold value, or the stripe visibility score *SVS* has reached a minimum.

12. The computer-implemented method of any one of embodiments 1 to 11, comprising:

- providing a trained conditional generative model,

- providing one or more radiologic images, the one or more radiologic images representing an examination area of an examination object.

- generating one or more conditional inputs based on the one or more radiologic images, wherein the one or more conditional inputs comprise one or more image embeddings generated based on the one or more images,

- generating a number N of synthetic radiologic images from different seeds based on the one or more conditional inputs using the trained generative model, wherein each synthetic radiologic image of the number $N$ of synthetic radiologic images represents the examination area of the examination object,

- generating a combined synthetic radiologic image based on the number $N$ of synthetic radiologic images, wherein the combined synthetic radiologic image represents the examination area of the examination object,

- outputting and/or storing the combined synthetic radiologic image, and/or transmitting the combined synthetic radiologic image to a separate computer system.

13. The computer-implemented method of any one of embodiments 1 to 12, wherein each synthetic radiologic image of the number $N$ of synthetic radiologic images is a synthetic MRI image, a synthetic CT image, a synthetic ultrasound image, or a synthetic PET image.

14. The computer-implemented method of any one of embodiments 1 to 13, wherein each synthetic radiologic image of the number $N$ of synthetic radiologic images represents the same examination area of an examination object, wherein the examination object is a living being, and the examination area is a part of the examination object.

15. The computer-implemented method of any one of embodiments 1 to 14, wherein the examination object is a mammal, and the examination area is or comprises a liver, kidney, heart, lung, brain, stomach, bladder, prostate, intestine, breast, thorax, stomach, pancreas, thyroid, uterus, or a part of said parts.

16. The computer-implemented method of any one of embodiments 1 to 15, wherein the trained conditional generative model is based on a trained diffusion model.

17. The computer-implemented method of any one of embodiments 1 to 16, wherein the trained conditional generative model comprises a denoising model of a trained conditional generative model.

18. The computer-implemented method of any one of embodiments 1 to 17, wherein the trained conditional generative model is a 2D or 2.5D conditional generative model.

19. The computer-implemented method of any one of embodiments 1 to 18, wherein the one or more conditional inputs are or comprise one or more image embeddings.

20. The computer-implemented method of any one of embodiments 1 to 19, wherein the one or more conditional inputs comprise a combined embedding generated based on two or more embeddings.

21. The computer-implemented method of any one of embodiments 1 to 20, wherein each synthetic radiologic image of the number $N$ of synthetic radiologic images is a two-dimensional synthetic radiologic image.

22. The computer-implemented method of any one of embodiments 1 to 21,

- wherein the one or more conditional inputs are based on a first radiologic image and/or a second radiologic image,

- wherein the first radiologic image represents an examination area of an examination object without contrast agent or after application of a first amount of a contrast agent,

- wherein the second radiologic image represents the examination area of the examination object after application of a second amount of the contrast agent, wherein the second amount is different from the first amount,

- wherein each synthetic radiologic image of the number $N$ of synthetic radiologic images represents the examination area of the examination object after application of a third amount of the contrast agent, wherein the third amount is different from the second amount and the first amount.

23. The computer-implemented method of any one of embodiments 1 to 21,

- wherein the one or more conditional inputs are based on a first radiologic image and/or a second radiologic image,

- wherein the first radiologic image represents an examination area of an examination object after application of a first amount of contrast agent,

- wherein the second radiologic image represents the examination area of the examination object after application of a second amount of a contrast agent, wherein the second amount is different from the first amount,

- wherein each synthetic radiologic of the number $N$ of synthetic radiologic images represents the examination area of the examination object without contrast agent.

24. The computer-implemented method of any one of embodiments 1 to 23,

- wherein the one or more conditional inputs are based on a first radiologic image and/or a second radiologic image,

- wherein the first radiologic image represents an examination area of an examination object at a first point in time,

- wherein the second radiologic image represents the examination area of the examination object at a second point in time, wherein the second point in time is different from the first point in time,

- wherein each synthetic radiologic image of the number *N* of synthetic radiologic images represents the examination area of the examination object at a third point in time, wherein the third point in time is different from the first point in time and the second point in time.

25. The computer-implemented method of any one of embodiments 1 to 24,

- wherein the one or more conditional inputs are based on undersampled MRI data,

- wherein each synthetic radiologic image of the number *N* of synthetic radiologic images is a synthetic MRI image.

26. The computer-implemented method of any one of embodiments 1 to 24,

- wherein the one or more conditional inputs are based on one or more low radiation dose CT images,

- wherein each synthetic radiologic image of the number *N* of synthetic radiologic images is a synthetic high radiation dose CT image.

27. The computer-implemented method of any one of embodiments 1 to 26,

- wherein the one or more conditional inputs are based on one or more radiologic images of a first modality,

- wherein each synthetic radiologic image of the number *N* of synthetic radiologic images is a synthetic radiologic image of a second modality.

28. The computer-implemented method of any one of embodiments 1 to 27,

- wherein the trained conditional generative model was trained on training data,

- wherein the training data comprises, for each reference object of a plurality of reference objects, (i) a first radiologic image and/or a second radiologic image, and (ii) a target radiologic image,

- wherein the first radiologic image represents an examination area of the reference object without contrast agent or after application of a first amount of a contrast agent,

- wherein the second radiologic image represents the examination area of the examination object after application of a second amount of the contrast agent, wherein the second amount is different from the first amount,

- wherein the target radiologic image represents the examination area of the reference object after application of a third amount of the contrast agent, wherein the third amount is different from the second amount and the first amount.

29. The computer-implemented method of any one of embodiments 1 to 27,

- wherein the trained conditional generative model was trained on trained data,

- wherein the training data comprises, for each reference object of a plurality of reference objects, (i) a first radiologic image and/or a second radiologic image, and (ii) a target radiologic image,

- wherein the first radiologic image represents an examination area of the reference object after application of a first amount of a contrast agent,

- wherein the second radiologic image represents the examination area of the reference object after application of a second amount of the contrast agent, wherein the second amount is different from the first amount,

- wherein the target radiologic image represents the examination area of the reference object without contrast agent.

30. The computer-implemented method of any one of embodiments 1 to 29,

- wherein the trained conditional generative model was trained on trained data,

- wherein the training data comprises, for each reference object of a plurality of reference objects, (i) a first radiologic image and/or a second radiologic image, and (ii) a target radiologic image,

- wherein the first radiologic image represents an examination area of the reference object at a first point in time,

- wherein the second radiologic image represents the examination area of the reference object at a second point in time, wherein the second point in time is different from the first point in time,

- wherein the target radiologic image represents the examination area of the reference object at a third point in time, wherein the third point in time is different from the first point in time and the second point in time.

31. The computer-implemented method of any one of embodiments 1 to 30,

- wherein the trained conditional generative model was trained on trained data,

- wherein the training data comprises, for each reference object of a plurality of reference objects, (i) undersampled MRI data, and (ii) a MRI image.

32. The computer-implemented method of any one of embodiments 1 to 30,

- wherein the trained conditional generative model was trained on trained data,

- wherein the training data comprises, for each reference object of a plurality of reference objects, (i) one or more low radiation dose CT images, and (ii) a target high radiation dose CT image.

33. The computer-implemented method of any one of embodiments 1 to 32,

- wherein the trained conditional generative model was trained on trained data,

- wherein the training data comprises, for each reference object of a plurality of reference objects, (i) on one or more radiologic images of a first modality, and (ii) a target radiologic image of a second modality.

34. A computer system comprising:

a processor; and

a memory storing an application program configured to perform, when executed by the processor, an operation, the operation comprising:

- providing a trained conditional generative model,

- providing one or more conditional inputs,

- generating a number of synthetic radiologic images from different seeds based on the one or more conditional inputs using the trained generative model,

- generating a combined synthetic radiologic image based on the number of synthetic radiologic images,

- outputting and/or storing the combined synthetic radiologic image, and/or transmitting the combined synthetic radiologic image to a separate computer system.

35. A non-transitory computer readable storage medium having stored thereon software instructions that, when executed by a processor of a computer system, cause the computer system to perform the steps:

- providing a trained conditional generative model,

- providing one or more conditional inputs,

- generating a number of synthetic radiologic images from different seeds based on the one or more conditional inputs using the trained generative model,

- generating a combined synthetic radiologic image based on the number of synthetic radiologic images,

- outputting and/or storing the combined synthetic radiologic image, and/or transmitting the combined synthetic radiologic image to a separate computer system.

36. A computer program comprising instructions which, when the computer program is executed by a computer system, cause the computer system to carry out the method of any one of embodiments 1 to 33.

37. A computer-readable storage medium comprising instructions which, when executed by a computer system, cause the computer system to carry out the method of any one of embodiments 1 to 33.

38. A computer system comprising a processor configured to perform the method of any one of embodiments 1 to 33.

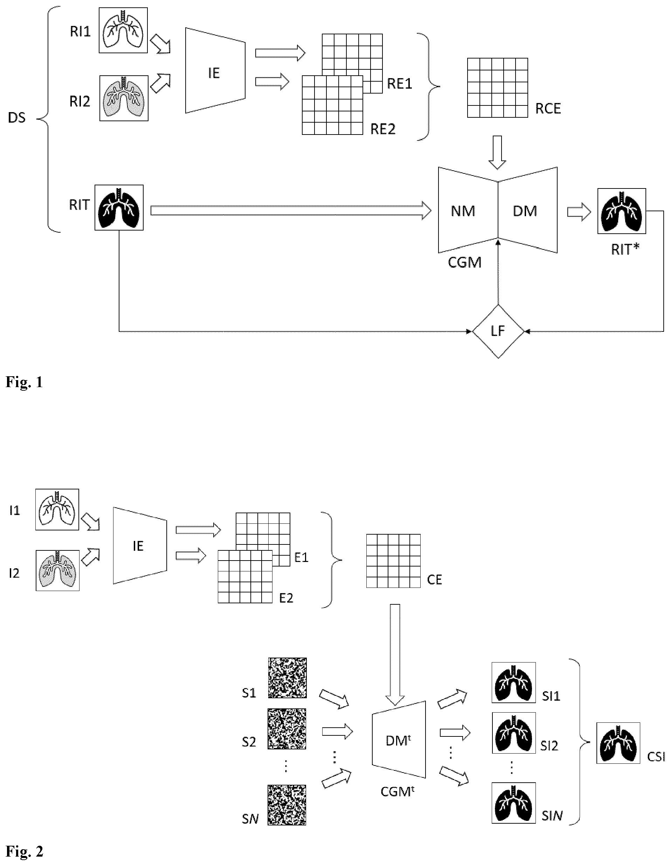

Fig. 1 shows schematically an embodiment of the training of the conditional generative model.

In a first step, training data is provided. The training data comprises, for each reference object of a plurality of reference objects, a data set.

For the sake of clarity, only one data set DS is shown in Fig. 1.

Each data set DS represents the examination area of a reference object.

The term "reference" is used in this disclosure to distinguish the phase of training the conditional generative model from the phase of using the trained conditional generative model for generation of synthetic radiologic images. The term "reference" otherwise has no limitation on meaning. A "reference object" is an object, the data of which is used to train the conditional generative model. On the other hand, data of an examination object are utilized to use the trained conditional generative model for prediction. Each reference object is, like the examination object, normally a living being, e.g. a mammal, e.g. a human.

In the example shown in Fig. 1, the reference object is a human being, and the examination area comprises the human lung.

It should be noted that in Figs. 1 and 2, the human lung was chosen as an example of an examination area. The depicted human lung is just a representation of any part of any reference object (or of an examination object). In other words, the human lung shown in Figs. 1 and 2 can also be another part of a reference object (or examination object), e.g. a liver, kidney, heart, lung, brain, stomach, bladder, prostate, intestine, thyroid, eye, breast, uterus or a part of said parts or another part of the body of a mammal (for example a human).

In the example shown in Fig. 1, the data set DS comprises a first radiologic image RI1, a second radiologic image RI2, and a target radiologic image RIT.

In the example shown in Fig. 1, the first radiologic image RI1 and the second radiologic image RI2 are used to generate a conditional input for the reconstruction of the target radiologic image RIT.

As described, it is also possible to generate a conditional input on other and/or less and/or additional data.

The first radiologic image RI1 may represent the examination area of the reference object without contrast agent or after application of a first amount of a contrast agent. The second radiologic image RI2 may represent the examination area of the reference object after application of a second amount of the contrast agent, wherein the second amount is different from (e.g. greater than) the first amount. The target radiologic image RIT may represent the examination area of the reference object after application of a third amount of the contrast agent, wherein the third amount is different from (e.g. greater than) the second amount and the first amount (see, e.g., WO2019/074938A1, WO2022184297A1).

The first radiologic image RI1 may represent the examination area of the reference object after application of a first amount of contrast agent. The second radiologic image RI2 may represent the examination area of the reference object after application of a second amount of the contrast agent, wherein the second amount is different from (e.g. greater than) the first amount. The target radiologic image RIT may represent the examination area of the reference object without contrast agent (see, e.g., WO2021069338A1).

The first radiologic image RI1 may represent the examination area of the reference object at a first point in time. The second radiologic image RI2 may represent the examination area of the reference object at a second point in time, wherein the second point in time is different from (e.g. later than) the first point in time. The target radiologic image RIT may represent the examination area of the reference object at a third point in time, wherein the third point in time is different from (e.g. later than) the first point in time and the second point in time (see, e.g., WO2021052896A1).

The first radiologic image RI1 may be a radiologic representation of a first modality and/or may have been generated according to a first measurement protocol. The second radiologic image RI2 may be a radiologic representation of a second modality and/or may have been generated according to a second measurement protocol, wherein the second modality is different from the first modality and/or the second measurement protocol is different from the first measurement protocol. The target radiologic image RIT may be a radiologic representation of a third modality and/or may have been generated according to a third measurement protocol, wherein the third modality is different from the first modality and the second modality, and/or the third measurement protocol is different from the first measurement protocol and the second measurement protocol (see, e.g., WO2022120731A1, US20220292737, US11170543B2, US11181598B2, WO2016/175755A1, WO2014/036473A1).

Further possibilities are conceivable.

An image embedding is generated from each of the radiologic images RI1 and RI2 using the image encoder IE. A first image embedding RE1 is generated from the first radiologic images RI1; a second image embedding RE2 is generated from the second radiologic images RI2.

In the example shown in Fig. 1, the image embeddings RE1 and RE2 are combined into one embedding, the combined embedding RCE.

There are several options to combine multiple image embeddings into one embedding.

Multiple image embeddings can be combined into one embedding by concatenation, i.e., by sticking the image embeddings end-to-end. If the image embeddings are vectors, a longer vector or a matrix can be created by concatenation. If the image embeddings are matrices, a matrix with more rows or columns or a tensor can be created by concatenation. This method (concatenation) retains all original information but may result in a high-dimensional conditional input.

Multiple image embeddings can be combined into one embedding by summation, i.e., by summing the image embeddings together elementwise.

Multiple image embeddings can be combined into one embedding by performing a principal component analysis (PCA), and generating an embedding based on identified principle components.

Multiple image embeddings can be combined into one embedding by averaging, i.e., by taking the element-wise mean (e.g., arithmetic means) of the image embeddings.

Multiple image embeddings can be combined into one embedding by weighted averaging. Weighted averaging is similar to averaging but each image embedding and/or each dimension of an image embedding is assigned a weight before averaging. The weights can be determined based on the importance of each image embedding and/or dimension, for example. The weights can be learned, for example. It is possible that the image encoder or a downstream artificial neural network that combines the image embeddings is included in the training of the conditional generative model and that the attention weights are learned during the training.

It is possible that the image encoder is or comprises a convolutional neural network (CNN) and that the parameters of the CNN are learned during the training of the conditional generative model. For example, the CNN can perform a 1D convolution over the elements of the image embeddings and thus merge the image embeddings into a single embedding.

The combined embedding RCE serves as a condition input to the conditional generative model CGM.

The target radiologic image RIT and the combined embedding RCE are inputted to the conditional generative model CGM.

The conditional generative model CGM is configured and trained to generate a reconstructed target radiologic image RIT* based on the target radiologic image RIT and the combined embedding RCE. The combined embedding RCE is used as a condition for generating the reconstructed target radiologic image RIT*.

The conditional generative model CGM comprises a noising model NM and a denoising model DM.

The noising model NM is configured to receive input data (i.e., the target radiologic image RIT) and generate noisy data in response to receipt of the input data. The noising model NM introduces noise to the input data to obfuscate the input data after a number of stages.

The denoising model DM is configured to reconstruct the input data (i.e., the target radiologic image RIT) from noisy data.

It should be noted that the diffusion approach can be performed in real space (e.g., pixel space or voxel space, as the case may be) or in latent space.

A loss function LF is used to quantify deviations between the target radiologic image RIT and the reconstructed target radiologic image RIT*.

The deviations can be reduced by modifying model parameters of the conditional generative model CGM.

The process shown in Fig. 1 is carried out for a plurality of data sets until a stop criterion is reached. Such a stop criterion can be for example: a predefined maximum number of training steps/cycles/epochs has been performed, deviations between output data and target data can no longer be reduced by modifying the model parameters, a predefined minimum of the loss function is reached, and/or an extreme value (e.g., maximum or minimum) of another performance value is reached.

During training, it is possible to mask part of the image embeddings. By masking, the conditional generative model is forced to compensate for the missing information. It learns to extract global information from local information.

The parts that are masked can be selected randomly or specifically. The proportion of masked parts can be constant or can be varied.

As described, the trained conditional generative model can be used to generate a synthetic radiologic image. This is shown schematically as an example in Fig. 2.

Fig. 2 shows a schematic example of the generation of a synthetic radiologic image using the trained conditional generative model.

In a first step, a trained conditional generative model CGM$^t$ is provided. The trained conditional generative model CGM$^t$ may have been trained as described with reference to Fig. 1.

It should be noted that the trained conditional generative model CGM$^t$ only includes the trained denoising model DM$^t$. The noising model NM shown in Fig. 1 as part of the conditional generative model CGM is not required for generating synthetic radiologic images.

In a further step, one or more conditional inputs are provided.

In the example shown in Fig. 2, the conditional input is generated based on radiologic images; a first radiologic image I1 and a second radiologic image I2.

The first radiologic image I1 is inputted into the image encoder IE, and the image encoder IE outputs a first image embedding E1. The second radiologic image I2 is inputted into the image encoder IE, and the image encoder IE outputs a second image embedding E2.

It should be noted that the image encoder IE is usually the same as that used for training the generative condition model CGM (see Fig. 1). The image encoder IE can also be included in the training of the generative condition model CGM.

The first image embedding E1 and the second image embedding E2 are combined into a combined embedding CE. The combined embedding CE serves as a conditional input.

A number N of different seeds S1, S2, ..., S*N* is provided. The seeds S1, S2, ..., SN may be random seeds. Each seed may be a noisy image. The noise may be Gaussian noise.

Based on each seed, a synthetic radiologic image is generated, wherein the combined embedding CE is used as a conditional input.

The trained denoising model DM$^t$ is configured and trained to generate a first synthetic radiologic image SI1 based on the first seed S1 using the combined embedding CE serves as a condition. The trained denoising model DM$^t$ is further configured and trained to generate a second synthetic radiologic image SI2 based on the second seed S2 using the combined embedding CE serves as a condition. And so on.

The number N of synthetic radiologic images SI1, SI2, ..., SIN are then combined into a combined synthetic radiologic image CSI.

The combined synthetic radiologic image CSI can be output, e.g. displayed on a display or printed by a printer, and/or stored in a data memory, and/or transmitted to as separate computer system.

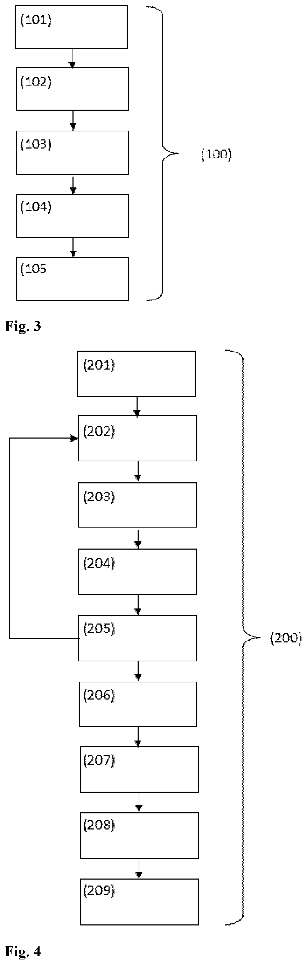

Fig. 3 shows an embodiment of the method for generating a synthetic radiologic image in the form of a flowchart.

The method (100) comprises:

(101) providing a trained conditional generative model,

(102) providing one or more conditional inputs,

(103) generating a number of synthetic radiologic images from different seeds based on the one or more conditional inputs using the trained generative model,

(104) generating a combined synthetic radiologic image based on the number of synthetic radiologic images,

(105) outputting and/or storing the combined synthetic radiologic image, and/or transmitting the combined synthetic radiologic image to a separate computer system.

Fig. 4 shows another embodiment of the method for generating a synthetic radiologic image in the form of a flowchart.

The method (200) comprises:

(201) providing a trained conditional generative model,

(202) providing one or more conditional inputs,

(203) generating a number N of synthetic radiologic image from different seeds based on the one or more conditional inputs using the trained generative model, wherein each synthetic radiologic image represents the same portion of an examination area of an examination object,

(204) generating a combined synthetic radiologic image based on the number $N$ of synthetic radiologic images, wherein the combined synthetic radiologic image represents the portion of the examination area of the examination object,

(205) repeating steps (202) to (204) one or more times and thereby generating combined synthetic radiologic images representing one or more additional portions of the examination area of the examination object,

(206) fusing the combined synthetic radiologic images into a three-dimensional synthetic radiologic image,

(207) determining whether the three-dimensional synthetic radiologic image meets one or more predetermined criteria with respect to stripe and/or streaking artifacts,

(208) in the event that the predetermined criteria are not met: increasing the number N of synthetic radiologic images until the criteria are met and/or until increasing the number N of synthetic radiologic images no longer results in a reduction of stripe and/or streaking artifacts,

(209) outputting and/or storing the combined synthetic radiologic images and/or the three-dimensional synthetic radiologic image, and/or transmitting the combined synthetic radiologic images and/or the three-dimensional synthetic radiologic image to a separate computer system.

The operations in accordance with the teachings herein may be performed by at least one computer specially constructed for the desired purposes or general-purpose computer specially configured for the desired purpose by at least one computer program stored in a typically non-transitory computer readable storage medium.

The term "non-transitory" is used herein to exclude transitory, propagating signals or waves, but to otherwise include any volatile or non-volatile computer memory technology suitable to the application.

The term "computer" should be broadly construed to cover any kind of electronic device with data processing capabilities, including, by way of non-limiting example, personal computers, servers, embedded cores, computing system, communication devices, processors (e.g., digital signal processor (DSP)), microcontrollers, field programmable gate array (FPGA), application specific integrated circuit (ASIC), etc.) and other electronic computing devices.

The term "process" as used above is intended to include any type of computation or manipulation or transformation of data represented as physical, e.g., electronic, phenomena which may occur or reside e.g., within registers and/or memories of at least one computer or processor. The term processor includes a single processing unit or a plurality of distributed or remote such units.

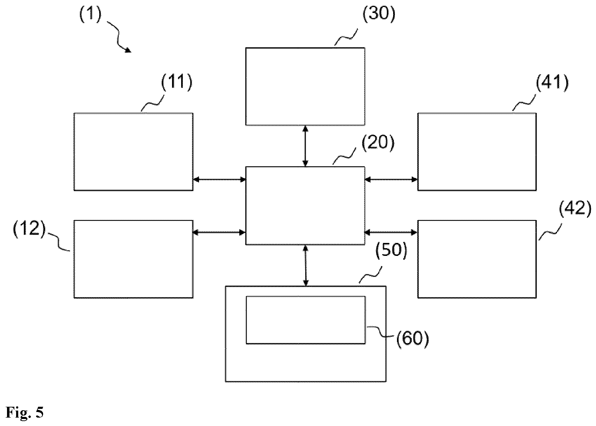

Fig. 5 illustrates a computer system (1) according to some example implementations of the present disclosure in more detail. The computer may include one or more of each of a number of components such as, for example, processing unit (20) connected to a memory (50) (e.g., storage device).

The processing unit (20) may be composed of one or more processors alone or in combination with one or more memories. The processing unit is generally any piece of computer hardware that is capable of processing information such as, for example, data, computer programs and/or other suitable electronic information. The processing unit is composed of a collection of electronic circuits some of which may be packaged as an integrated circuit or multiple interconnected integrated circuits (an integrated circuit at times more commonly referred to as a "chip"). The processing unit may be configured to execute computer programs, which may be stored onboard the processing unit or otherwise stored in the memory (50) of the same or another computer.

The processing unit (20) may be a number of processors, a multi-core processor or some other type of processor, depending on the particular implementation. Further, the processing unit may be implemented using a number of heterogeneous processor systems in which a main processor is present with one or more secondary processors on a single chip. As another illustrative example, the processing unit may be a symmetric multi-processor system containing multiple processors of the same type. In yet another example, the processing unit may be embodied as or otherwise include one or more ASICs, FPGAs or the like. Thus, although the processing unit may be capable of executing a computer program to perform one or more functions, the processing unit of various examples may be capable of performing one or more functions without the aid of a computer program. In either instance, the processing unit may be appropriately programmed to perform functions or operations according to example implementations of the present disclosure.

The memory (50) is generally any piece of computer hardware that is capable of storing information such as, for example, data, computer programs (e.g., computer-readable program code (60)) and/or other suitable information either on a temporary basis and/or a permanent basis. The memory may include volatile and/or non-volatile memory, and may be fixed or removable. Examples of suitable memory include random access memory (RAM), read-only memory (ROM), a hard drive, a flash memory, a thumb drive, a removable computer diskette, an optical disk, a magnetic tape or some combination of the above. Optical disks may include compact disk - read only memory (CD-ROM), compact disk - read/write (CD-R/W), DVD, Blu-ray disk or the like. In various instances, the memory may be referred to as a computer-readable storage medium. The computer-readable storage medium is a non-transitory device capable of storing information, and is distinguishable from computer-readable transmission media such as electronic transitory signals capable of carrying information from one location to another. Computer-readable medium as described herein may generally refer to a computer-readable storage medium or computer-readable transmission medium.

In addition to the memory (50), the processing unit (20) may also be connected to one or more interfaces for displaying, transmitting and/or receiving information. The interfaces may include one or more communications interfaces and/or one or more user interfaces. The communications interface(s) may be configured to transmit and/or receive information, such as to and/or from other computer(s), network(s), database(s) or the like. The communications interface may be configured to transmit and/or receive information by physical (wired) and/or wireless communications links. The communications interface(s) may include interface(s) (41) to connect to a network, such as using technologies such as cellular telephone, Wi-Fi, satellite, cable, digital subscriber line (DSL), fiber optics and the like. In some examples, the communications interface(s) may include one or more short-range communications interfaces (42) configured to connect devices using short-range communications technologies such as NFC, RFID, Bluetooth, Bluetooth LE, ZigBee, infrared (e.g., IrDA) or the like.

The user interfaces may include a display (30). The display may be configured to present or otherwise display information to a user, suitable examples of which include a liquid crystal display (LCD), light-emitting diode display (LED), plasma display panel (PDP) or the like. The user input interface(s) (11) may be wired or wireless, and may be configured to receive information from a user into the computer system (1), such as for processing, storage and/or display. Suitable examples of user input interfaces include a microphone, image or video capture device, keyboard or keypad, joystick, touch-sensitive surface (separate from or integrated into a touchscreen) or the like. In some examples, the user interfaces may include automatic identification and data capture (AIDC) technology (12) for machine-readable information. This may include barcode, radio frequency identification (RFID), magnetic stripes, optical character recognition (OCR), integrated circuit card (ICC), and the like. The user interfaces may further include one or more interfaces for communicating with peripherals such as printers and the like.

As indicated above, program code instructions may be stored in memory, and executed by processing unit that is thereby programmed, to implement functions of the systems, subsystems, tools and their respective elements described herein. As will be appreciated, any suitable program code instructions may be loaded onto a computer or other programmable apparatus from a computer-readable storage medium to produce a particular machine, such that the particular machine becomes a means for implementing the functions specified herein. These program code instructions may also be stored in a computer-readable storage medium that can direct a computer, processing unit or other programmable apparatus to function in a particular manner to thereby generate a particular machine or particular article of manufacture. The instructions stored in the computer-readable storage medium may produce an article of manufacture, where the article of manufacture becomes a means for implementing functions described herein. The program code instructions may be retrieved from a computer-readable storage medium and loaded into a computer, processing unit or other programmable apparatus to configure the computer, processing unit or other programmable apparatus to execute operations to be performed on or by the computer, processing unit or other programmable apparatus.

Retrieval, loading and execution of the program code instructions may be performed sequentially such that one instruction is retrieved, loaded and executed at a time. In some example implementations, retrieval, loading and/or execution may be performed in parallel such that multiple instructions are retrieved, loaded, and/or executed together. Execution of the program code instructions may produce a computer-implemented process such that the instructions executed by the computer, processing circuitry or other programmable apparatus provide operations for implementing functions described herein.

Execution of instructions by processing unit, or storage of instructions in a computer-readable storage medium, supports combinations of operations for performing the specified functions. In this manner, a computer system (1) may include processing unit (20) and a computer-readable storage medium or memory (50) coupled to the processing circuitry, where the processing circuitry is configured to execute computer-readable program code (60) stored in the memory. It will also be understood that one or more functions, and combinations of functions, may be implemented by special purpose hardware-based computer systems and/or processing circuitry which perform the specified functions, or combinations of special purpose hardware and program code instructions.

Claims

1. A computer-implemented method comprising:

   - providing a trained conditional generative model,
   - providing one or more conditional inputs,
   - generating a number N of synthetic radiologic images from different seeds based on the one or more conditional inputs using the trained generative model,
   - generating a combined synthetic radiologic image based on the number *N* of synthetic radiologic images,
   - outputting and/or storing the combined synthetic radiologic image, and/or transmitting the combined synthetic radiologic image to a separate computer system.

2. The computer-implemented method of claim 1, wherein the combined synthetic radiologic image is a synthetic radiologic image averaged over all synthetic radiologic images of the number N of synthetic radiologic images.

3. The computer-implemented method of claim or 2, wherein the trained conditional generative model is based on a trained diffusion model, wherein each seed of the different seeds comprises different noise data.

4. The computer-implemented method of any one of claims 1 to 3, wherein the different seeds are randomly sampled.

5. The computer-implemented method of any one of claims 1 to 4, wherein the number N is an integer greater than 1 and less than 100.

6. The computer-implemented method of any one of claims 1 to 5, wherein the number N depends on whether and/or to what extent artifacts are reduced by combining the generated synthetic radiologic images.

7. The computer-implemented method of any one of claims 1 to 6, comprising:

   (1) providing a trained conditional generative model,
   (2) providing one or more conditional inputs,
   (3) generating a number N of synthetic radiologic image from different seeds based on the one or more conditional inputs using the trained generative model, wherein each synthetic radiologic image represents the same portion of an examination area of an examination object,
   (4) generating a combined synthetic radiologic image based on the number N of synthetic radiologic images, wherein the combined synthetic radiologic image represents the portion of the examination area of the examination object,
   (5) repeating steps (2) to (4) one or more times and thereby generating combined synthetic radiologic images representing one or more additional portions of the examination area of the examination object,
   (6) fusing the combined synthetic radiologic images into a three-dimensional synthetic radiologic image,
   (7) determining whether the three-dimensional synthetic radiologic image meets one or more predetermined criteria with respect to stripe and/or streaking artifacts,
   (8) in the event that the predetermined criteria are not met: increasing the number N of synthetic radiologic images until the criteria are met and/or until increasing the number N of synthetic radiologic images no longer results in a reduction of stripe and/or streaking artifacts,
   (9) outputting and/or storing the combined synthetic radiologic images and/or the three-dimensional synthetic radiologic image, and/or transmitting the combined synthetic radiologic images and/or the three-dimensional synthetic radiologic image to a separate computer system.

8. The computer-implemented method of claim 7, wherein determining whether the three-dimensional synthetic radiologic image meets one or more predetermined criteria with respect to streaking and/or streaking artifacts comprises:

   - sampling slices from the three-dimensional synthetic radiologic image along different directions,
   - quantifying stripe and/or streaking artifact in the sampled slices.

9. The computer-implemented method of claim 7 or 8, wherein determining whether the three-dimensional synthetic radiologic image meets one or more predetermined criteria with respect to streaking and/or streaking artifacts comprises:

- calculating a stripe visibility score *SVS* according to any one or formulae (I) to (V)

$$SVS = \frac{1}{3}\sum_{p=1}^{3}\left\|\mathbf{I}_p - destribe(\mathbf{I}_p)\right\| \qquad (I)$$

$$SVS = \frac{1}{3}\sum_{p=1}^{3}\frac{1}{N_p}\sum_{i=1}^{N_p}\left\|\mathbf{I}_{s_i^p} - destripe(\mathbf{I}_{s_i^p})\right\| \qquad (II)$$

$$SVS = \max_{p=1,2,3}\frac{1}{N_p}\sum_{i=1}^{N_p}\left\|\mathbf{I}_{s_i^p} - destripe(\mathbf{I}_{s_i^p})\right\| \qquad (III)$$

$$SVS = \frac{1}{3}\sum_{P=1}^{3}\max_{i=1,\dots,N_p}\left\|\mathbf{I}_{s_i^p} - destripe(\mathbf{I}_{s_i^p})\right\| \qquad (IV)$$

$$SVS = \max_{p=1,2,3}\max_{i=1,\dots,N_p}\left\|\mathbf{I}_{s_i^p} - destripe(\mathbf{I}_{s_i^p})\right\| \qquad (V)$$

wherein *p* represents different planes,
wherein $\mathbf{I}_p$ represents a slice parallel to a plane *p*,
wherein $N_p$ denotes the number of slices parallel to a plane *p*,
wherein $\mathbf{I}_{s_1^p}, \dots, \mathbf{I}_{s_{N_p}^p}$ represent slices parallel to a plane *p*,
wherein *destribe* denotes a method to remove stripes and/or streaking artifacts from images.

10. The computer-implemented method of claim 9, wherein determining whether the three-dimensional synthetic radiologic image meets one or more predetermined criteria with respect to streaking and/or streaking artifacts comprises:

   - progressively generating synthetic radiologic images and combining the generated synthetic radiologic images into a combined synthetic radiologic image until the stripe visibility score *SVS* reaches or falls below a pre-defined threshold value, or the stripe visibility score *SVS* has reached a minimum.

11. The computer-implemented method of any one of claims 1 to 10, comprising:

   - providing a trained conditional generative model,
   - providing one or more radiologic images, the one or more radiologic images representing an examination area of an examination object.
   - generating one or more conditional inputs based on the one or more radiologic images, wherein the one or more conditional inputs comprise one or more image embeddings generated based on the one or more images,
   - generating a number *N* of synthetic radiologic images from different seeds based on the one or more conditional inputs using the trained generative model, wherein each synthetic radiologic image of the number *N* of synthetic radiologic images represents the examination area of the examination object,
   - generating a combined synthetic radiologic image based on the number *N* of synthetic radiologic images, wherein the combined synthetic radiologic image represents the examination area of the examination object,
   - outputting and/or storing the combined synthetic radiologic image, and/or transmitting the combined synthetic radiologic image to a separate computer system.

12. The computer-implemented method of any one of claims 1 to 11, wherein each synthetic radiologic image of the number *N* of synthetic radiologic images represents the same examination area of an examination object, wherein the examination object is a living being, and the examination area is a part of the examination object.

13. The computer-implemented method of any one of claims 1 to 12, wherein the trained conditional generative model is based on a trained diffusion model.

14. The computer-implemented method of any one of claims 1 to 13, wherein the trained conditional generative model is a 2D or 2.5D conditional generative model, and each synthetic radiologic image of the number $N$ of synthetic radiologic images is a two-dimensional synthetic radiologic image.

15. The computer-implemented method of any one of claims 1 to 14, wherein the one or more conditional inputs are or comprise one or more image embeddings.

16. The computer-implemented method of any one of claims 1 to 15,

- wherein the one or more conditional inputs are based on a first radiologic image and/or a second radiologic image,
- wherein the first radiologic image represents an examination area of an examination object without contrast agent or after application of a first amount of a contrast agent,
- wherein the second radiologic image represents the examination area of the examination object after application of a second amount of the contrast agent, wherein the second amount is different from the first amount,
- wherein each synthetic radiologic image of the number $N$ of synthetic radiologic images represents the examination area of the examination object after application of a third amount of the contrast agent, wherein the third amount is different from the second amount and the first amount.

17. The computer-implemented method of any one of claims 1 to 16,

- wherein the trained conditional generative model was trained on training data,
- wherein the training data comprises, for each reference object of a plurality of reference objects, (i) a first radiologic image and/or a second radiologic image, and (ii) a target radiologic image,
- wherein the first radiologic image represents an examination area of the reference object without contrast agent or after application of a first amount of a contrast agent,
- wherein the second radiologic image represents the examination area of the examination object after application of a second amount of the contrast agent, wherein the second amount is different from the first amount,
- wherein the target radiologic image represents the examination area of the reference object after application of a third amount of the contrast agent, wherein the third amount is different from the second amount and the first amount.

18. The computer-implemented method of any one of claims 1 to 17,

- wherein training of the trained conditional generative model comprised:

    • providing a conditional generative model,
    • providing training data, wherein the training data comprised, for each reference object of a plurality of reference objects, one or more conditional inputs and a target radiologic image, wherein the one or more conditional inputs and the target radiologic image represent an examination area of the reference object,
    • reconstructing the target radiologic image using the conditional generative model, wherein the one or more conditional inputs are used as condition,
    • quantifying deviations between the target radiologic image and the reconstructed target radiologic image,
    • reducing the deviations by modifying parameters of the conditional generative model.

19. A computer system comprising:

    a processor; and
    a memory storing an application program configured to perform, when executed by the processor, an operation, the operation comprising:

        - providing a trained conditional generative model,
        - providing one or more conditional inputs,
        - generating a number of synthetic radiologic images from different seeds based on the one or more conditional inputs using the trained generative model,
        - generating a combined synthetic radiologic image based on the number of synthetic radiologic images,
        - outputting and/or storing the combined synthetic radiologic image, and/or transmitting the combined synthetic radiologic image to a separate computer system.

20. A non-transitory computer readable storage medium having stored thereon software instructions that, when executed by a processor of a computer system, cause the computer system to:

      - provide a trained conditional generative model,
      - provide one or more conditional inputs,
      - generate a number of synthetic radiologic images from different seeds based on the one or more conditional inputs using the trained generative model,
      - generate a combined synthetic radiologic image based on the number of synthetic radiologic images,
      - output and/or store the combined synthetic radiologic image, and/or transmit the combined synthetic radiologic image to a separate computer system.

Fig. 1

Fig. 2

(101)

(102)

(103)

(104)

(105

} (100)

**Fig. 3**

(201)

(202)

(203)

(204)

(205)

(206)

(207)

(208)

(209)

} (200)

**Fig. 4**

(1)

(11)

(30)

(41)

(20)

(12)

(50)

(42)

(60)

Fig. 5

| | Europäisches Patentamt European Patent Office Office européen des brevets | **EUROPEAN SEARCH REPORT** | **Application Number** EP 24 18 4524 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZOLNAMAR DORJSEMBE ET AL: "Conditional Diffusion Models for Semantic 3D Medical Image Synthesis", ARXIV.ORG, CORNELL UNIVERSITY LIBRARY, 201 OLIN LIBRARY CORNELL UNIVERSITY ITHACA, NY 14853, 21 July 2023 (2023-07-21), XP091569572, | 1-8, 11-20 | INV. G06T5/50 G06T5/77 G06T7/00 G06T11/00 |
| A | * abstract * * figure 1 * * Sections I and II * ----- | 9,10 | |
| X | YUAN GAO ET AL: "CT-based synthetic iodine map generation using conditional denoising diffusion probabilistic model", MEDICAL PHYSICS, AIP, MELVILLE, NY, US, vol. 51, no. 9, 18 June 2024 (2024-06-18), pages 6246-6258, XP072721019, ISSN: 0094-2405, DOI: 10.1002/MP.17258 * abstract * * figure 1 * * Sections I and II * ----- | 1,11,12, 19,20 | |
| | | | TECHNICAL FIELDS SEARCHED (IPC) |
| X | ZHENGHAO FENG ET AL: "Diffusion-based Radiotherapy Dose Prediction Guided by Inter-slice Aware Structure Encoding", ARXIV.ORG, CORNELL UNIVERSITY LIBRARY, 201 OLIN LIBRARY CORNELL UNIVERSITY ITHACA, NY 14853, 6 November 2023 (2023-11-06), XP091810171, * abstract * * figure 2 * * Sections I and III * ----- | 1,11,12, 19,20 | G06T |

-/--

The present search report has been drawn up for all claims

| Place of search | Date of completion of the search | Examiner |
|---|---|---|
| Munich | 13 January 2025 | Leclercq, Philippe |

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 18 4524

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHAOYAN PAN ET AL: "Synthetic CT Generation from MRI using 3D Transformer-based Denoising Diffusion Model", ARXIV.ORG, CORNELL UNIVERSITY LIBRARY, 201 OLIN LIBRARY CORNELL UNIVERSITY ITHACA, NY 14853, 31 May 2023 (2023-05-31), XP091524352, * abstract * * figure 2 * * Sections 1 and 2 * | 1,11,12, 19,20 | |
| | ----- | | |
| A | TIANGE XIANG ET AL: "DDM^2: Self-Supervised Diffusion MRI Denoising with Generative Diffusion Models", ARXIV.ORG, CORNELL UNIVERSITY LIBRARY, 201 OLIN LIBRARY CORNELL UNIVERSITY ITHACA, NY 14853, 6 February 2023 (2023-02-06), XP091430412, * the whole document * | 1-20 | |
| | ----- | | TECHNICAL FIELDS SEARCHED (IPC) |

The present search report has been drawn up for all claims

| Place of search | Date of completion of the search | Examiner |
|---|---|---|
| Munich | 13 January 2025 | Leclercq, Philippe |

EPO FORM 1503 03.82 (P04C01)

page 2 of 2

## REFERENCES CITED IN THE DESCRIPTION

### Patent documents cited in the description

- WO 2019074938 A1
- WO 2022184297 A1
- WO 2021069338 A1
- WO 2021052896 A1
- US 11170543 B2
- US 11181598 B2
- WO 2016175755 A1
- WO 2014036473 A1
- WO 2022120731 A1
- US 20220292737 A

### Non-patent literature cited in the description

- **L. ZHU et al.** : Make-A-Volume: Leveraging Latent Diffusion Models for Cross Modality 3D Brain MRI Synthesis. *arXiv:2307.10094v1*, 2023
- **Y. HU et al.** : DiffGEPCI: 3D MRI Synthesis from mGRE Signals using 2.5D Diffusion Model. *arXiv:2311.18073v2*, 2024
- **J. HO et al.** : Denoising Diffusion Probabilistic Models. *arXiv:2006.11239v2*
- **Y. SONG et al.** Score-Based Generative Modeling through Stochastic Differential Equations,. *arXiv:2011.13456v2*
- **J. SONG et al.** Denoising Diffusion Implicit Models. *arXiv:2010.02502v4*
- **K. PREECHAKUL et al.** Diffusion autoencoders: Toward a meaningful and decodable representation. *arXiv:2111.15640v3*
- **M. CARON et al.** : Emerging Properties in Self-Supervised Vision Transformers. *arXiv:2104.14294v2*
- **M. OQUAB et al.** DINOv2: Learning Robust Visual Features without Supervision. *arXiv:2304.07193v1*
- **A. RADFORD et al.** Learning Transferable Visual Models From Natural Language Supervision. *arXiv:2103.00020v1*
- **S. ZHANG et al.** Large-Scale Domain-Specific Pretraining for Biomedical Vision-Language Processing. *arXiv:2303.00915v1*
- **B. MÜNCH et al.** Stripe and ring artifact removal with combined wavelet. *Fourier filtering, Opt. Express*, 2009, vol. 17, 8567-8591
- **J. SWANEY et al.** *Scalable image processing techniques for quantitative analysis of volumetric biological images from light-sheet microscopy*